# EUROPEAN PATENT APPLICATION

(11) **EP 4 807 862 A1**
(43) Date of publication of application: **16.09.2026**
(21) Application number: 24895828.2
(22) Date of filing: 28.08.2024
(51) Int. Cl.: H01M 50/103, H01M 50/10

(54) **BATTERY CELL, BATTERY AND ELECTRICAL DEVICE**

(30) Priority: 27.11.2023 CN 202311608062
(71) Applicant: Contemporary Amperex Technology Co., Limited, Ningde, Fujian 352100 (CN)
(72) Inventor: CHEN, Xinxiang, Ningde, Fujian 352100 (CN); HUANG, Shoujun, Ningde, Fujian 352100 (CN); JIN, Haizu, Ningde, Fujian 352100 (CN); WANG, Peng, Ningde, Fujian 352100 (CN); ZHENG, Yulian, Ningde, Fujian 352100 (CN)
(74) Representative: Kraus & Lederer PartGmbB
(86) International application number: PCT/CN2024/115245
(87) International publication number: WO 2025/112727

(57) **Abstract**

A battery cell (21), a battery (100), and an electrical apparatus are provided. The battery cell (21) includes: a shell (211), the shell (211) having a predetermined wall (212), the predetermined wall (212) being provided with a pressure relief portion (213) and a first glue-applied portion (214), and the first glue-applied portion (214) being arranged on two opposite sides of the pressure relief portion (213); an electrode assembly (22), the electrode assembly (22) being provided inside the shell (211); and an electrode terminal (23), the electrode terminal (23) being provided on the shell (211) and being electrically connected to the electrode assembly (22).

## Description

### CROSS-REFERENCE TO RELATED APPLICATIONS

The present application is filed based on and claims priority to the Chinese Patent Application with application number of 202311608062.6, filed on November 27, 2023, and entitled "BATTERY CELL, BATTERY, AND ELECTRICAL DEVICE", the entire contents of which are incorporated herein by reference.

### TECHNICAL FIELD

The present application relates to the technical field of batteries, and in particular to a battery cell, a battery, and an electrical device.

### BACKGROUND

In recent years, new energy vehicles have made a leap forward in development. In the field of electric vehicles, power batteries, as power sources of electric vehicles, play an irreplaceable and important role. A battery consists of a box and a plurality of battery cells accommodated in the box. As a core component of new energy vehicles, the battery has high requirements in terms of both safety and service life. A large amount of heat is generated during the continuous charging and discharging use process of the battery cells in the battery. In the related art, a pressure relief portion may be provided in the battery cell, allowing pressure to be relieved through the pressure relief portion when the battery cell experiences thermal runaway, which results in poor reliability of the battery cell.

### SUMMARY OF THE INVENTION

The present application is intended to solve at least one of the technical problems existing in the prior art. To this end, the present application proposes a battery cell, a battery, and an electrical device, which can well reduce the situation where the pressure relief portion is damaged when the electrode assembly expands, thereby ensuring the safety and reliability of the battery cell in use.

In a first aspect, an embodiment of the present application provides a battery cell, including: a shell having a predetermined wall, the predetermined wall being provided with a pressure relief portion and a first glue-applied portion, where the first glue-applied portion is provided on two opposite sides of the pressure relief portion; an electrode assembly, the electrode assembly being provided in the shell; and an electrode terminal, the electrode terminal being provided on the shell and electrically connected to the electrode assembly.

In the aforementioned technical solution, by providing the battery cell as described above, two sides of the battery cell in the first direction of the pressure relief portion are each provided with the first glue-applied portion, so that after the battery cell is installed in the box, the predetermined wall is adhered to the inner wall of the box through the two first glue-applied portions, so as to relatively fix the predetermined wall to the inner bottom wall of the box. In this way, when the electrode assembly undergoes long-term charging and discharging and expands internally, the predetermined wall is adhered to the box through the first glue-applied portions, which can reduce the deformation of the predetermined wall, i.e., the wall surface where the pressure relief portion is located, as the electrode assembly expands, thereby reducing the occurrence of damage to the pressure relief portion, lowering the probability of liquid leakage from the pressure relief portion, and improving the stability and reliability of the battery cell.

In some embodiments, the predetermined wall has a first direction, the first glue-applied portion extending along the first direction, and in the first direction, a dimension of the pressure relief portion being L1, and a dimension of the first glue-applied portion being L2, where 1.0 ≤ L2/L1 ≤ 2.0.

In the aforementioned technical solution, the length of the first glue-applied portion along the first direction is set to be greater than the length of the pressure relief portion along the first direction, so that the first glue-applied portion can cover various regions on both sides of the pressure relief portion in the first direction, thereby facilitating the enhancement of the adhesion effect of the first glue-applied portions on both sides of the pressure relief portion. It can be understood that, during actual installation, the predetermined wall is adhered and fixed to the inner wall of the box of the battery on both sides of the pressure relief portion along the first direction through the first glue-applied portions, and an extension length of the adhesion region along the first direction is greater than that of the pressure relief portion, so that the adhesion region can comprehensively cover the pressure relief portion from both sides. In this way, when the electrode assembly expands, the force transmitted to the predetermined wall can be absorbed to a maximum extent by the first glue-applied portions on both sides, reducing the force transmitted to the pressure relief portion through uncovered regions, thereby enhancing the protection effect on the pressure relief portion and improving the safety of the battery cell.

In some embodiments, L2/L1 ≤ 1.5.

In this technical solution, the extension length of the first glue-applied portion along the first direction is not only greater than that of the pressure relief portion but also closer to that of the pressure relief portion. This enables the first glue-applied portion not only to structurally strengthen the regions on both sides of the pressure relief portion by means of adhesion, but also to reduce waste of the glue-applied region caused by an excessively large length of the first glue-applied portion, while also reducing the occupation of adhesion space under the premise of ensuring adhesion strength.

In addition, it can be understood that after adhesion through the first glue-applied portion, it is necessary not only to ensure the safety at the pressure relief portion, but also to avoid excessively tight adhesion caused by the first glue-applied portion. That is, the first glue-applied portion does not adhere to the entire surface of the predetermined wall, so that the predetermined wall can absorb a certain amount of expansion force generated by the electrode assembly while ensuring the safety of the pressure relief portion, thereby reducing excessively tight internal compression of the electrode assembly, and improving the rationality of the overall arrangement.

In some embodiments, the predetermined wall has a first direction and a second direction, the first glue-applied portion extending along the first direction, the second direction being perpendicular to the first direction, and in the second direction, a dimension of the pressure relief portion being W1, and a dimension of the first glue-applied portion being W2, 0.3 ≤ W2/W1 ≤ 1.0.

In the aforementioned technical solution, setting the dimensions of the first glue-applied portion and the pressure relief portion in the second direction within the aforementioned range can prevent the width dimension of the first glue-applied portion from being too small, which consequently ensures sufficient adhesion area between the predetermined wall and the inner wall of the box, and improves the adhesion stability therebetween, thereby effectively reducing the deformation of the predetermined wall in the region where the pressure relief portion is located. At the same time, the coated area of the first glue-applied portion will not be too large, reducing glue-applying waste, and a deformation region is reserved in a region on the outer side of the first glue-applied portion to achieve expansion and collapse while ensuring the safety of the pressure relief portion, thereby improving the internal safety of the battery cell.

In some embodiments, 0.4 ≤ W2/W1 ≤ 0.7.

In the aforementioned technical solution, it can further prevent the width dimension of the first glue-applied portion from being too small, which consequently ensures sufficient adhesion area between the predetermined wall and the inner wall of the box, and improves the adhesion stability therebetween, thereby effectively reducing the deformation of the predetermined wall in the region where the pressure relief portion is located. Similarly, the coated area of the first glue-applied portion will not be too large, reducing glue-applying waste, and a deformation region is reserved in a region on the outer side of the first glue-applied portion to achieve expansion and collapse while ensuring the safety of the pressure relief portion, thereby improving the internal safety of the battery cell.

In some embodiments, the predetermined wall is provided with a non-glue-applied portion, the non-glue-applied portion being provided on a side of the first glue-applied portion away from the pressure relief portion.

In the aforementioned technical solution, by providing the non-glue-applied portion, a blank glue overflow region can be formed on the outer side of the first glue-applied portion. In other words, when glue is applied to the first glue-applied portion and the battery cell is installed in the box, the installation extrusion pressure allows the adhesive glue at the first glue-applied portion to overflow toward the non-glue-applied portion, i.e., during installation, the adhesive glue at the first glue-applied portion will not overflow from the predetermined wall, reducing the overflow of the adhesive glue to other regions.

In addition, the non-glue-applied portion is a region of the predetermined wall that is not adhered to the inner wall of the box. This region is spaced apart from the pressure relief portion, and the force applied thereto will not directly act on the pressure relief portion, and can absorb part of the expansion force from the interior of the electrode assembly, thereby both reducing damage to the pressure relief portion and reducing the internal pressure of the electrode assembly, improving the safety of the battery cell.

In some embodiments, the predetermined wall has a first direction and a second direction, the first glue-applied portion extending along the first direction, the second direction being perpendicular to the first direction, and in the second direction, a dimension of the non-glue-applied portion being W3, and a dimension of the predetermined wall being WO, where 0.05 ≤ W3/WO ≤ 0.2.

In the aforementioned technical solution, setting the dimensions of the non-glue-applied portion and the predetermined wall in the second direction within the aforementioned range can prevent the width dimension of the non-glue-applied portion from being too small, thereby ensuring sufficient glue overflow space on the outer side of the first glue-applied portion, achieving effective glue overflow at the first glue-applied portion. Of course, the width dimension of the non-glue-applied portion will not be made too large, reducing the space occupation of the non-glue-applied portion, balancing the width dimension of the first glue-applied portion, and ensuring the reliability of adhesion.

In some embodiments, 0.08 ≤ W3/WO ≤ 0.15.

In the aforementioned technical solution, setting the dimensions of the non-glue-applied portion and the predetermined wall in the second direction within the aforementioned range can further prevent the width dimension of the non-glue-applied portion from being too small, thereby ensuring sufficient glue overflow space on the outer side of the first glue-applied portion, achieving effective glue overflow at the first glue-applied portion. Similarly, the width dimension of the non-glue-applied portion will not be made too large, reducing the space occupation of the non-glue-applied portion, balancing the width dimension of the first glue-applied portion, and ensuring the reliability of adhesion.

In some embodiments, a first gap is formed between the first glue-applied portion and the pressure relief portion, and the predetermined wall has a first direction and a second direction, the first glue-applied portion extending along the first direction, the second direction being perpendicular to the first direction, and in the second direction, a dimension of the first gap being h1, where 3 mm ≤ h1 ≤ 15 mm.

In the aforementioned technical solution, by providing the first gap, sufficient glue overflow space is ensured on the inner side of the first glue-applied portion, achieving effective glue overflow at the first glue-applied portion. In this way, glue overflow spaces are formed on both the inner side and the outer side of the first glue-applied portion, which can not only reduce the overflow of the adhesive glue of the first glue-applied portion to the outside of the predetermined wall, but also reduce the inward overflow of the adhesive glue of the first glue-applied portion toward the pressure relief portion, reducing the risk of glue overflow enhancing the adhesion of the score lines, and ensuring the reliability of the pressure relief portion.

In some embodiments, the predetermined wall has a first direction and a second direction, the first glue-applied portion extending along the first direction, and the second direction being perpendicular to the first direction, where in the second direction, one of two opposite edges of the first glue-applied portion abuts an edge of the predetermined wall, and the other one abuts an edge of the pressure relief portion.

Here, in the second direction, one of the two opposite edges of the first glue-applied portion abuts the edge of the predetermined wall, and the other one abuts the edge of the pressure relief portion. That is to say, in the second direction, the first glue-applied portion is located in a region of the predetermined wall other than the pressure relief portion. In other words, the width of the first glue-applied portion along the second direction is equal to the distance between the edge of the predetermined wall and the edge of the pressure relief portion, so that the regions of the predetermined wall on both sides of the pressure relief portion in the second direction are both glue-applied regions of the first glue-applied portion. Thus, the area of the adhesion region of the predetermined wall outside the pressure relief portion can be increased, improving the adhesion stability between the predetermined wall and the box, thereby reducing the influence of the internal expansion of the electrode assembly on the pressure relief portion.

In some embodiments, the predetermined wall has a first direction and a second direction, the first glue-applied portion extending along the first direction, and the second direction being perpendicular to the first direction, and the predetermined wall is provided with a non-glue-applied portion, the non-glue-applied portion being provided on a side of the first glue-applied portion away from the pressure relief portion, and in the second direction, a dimension of the first glue-applied portion being W2, and a dimension of the non-glue-applied portion being W3, where 0.4 ≤ W3/W2 ≤ 1.0.

In the aforementioned technical solution, by setting the dimensions of the first glue-applied portion and the predetermined wall within the aforementioned ratio range, the dimension of the first glue-applied portion can be made sufficiently large, ensuring that the adhesion force between the first glue-applied portion and the box can guarantee the stability of the region where the pressure relief portion is located. At the same time, the width of the first glue-applied portion will not be made too large, leaving sufficient installation space for the pressure relief portion in the second direction, thereby achieving reasonable installation of the pressure relief portion.

In some embodiments, 0.6 ≤ W3/W2 ≤ 0.8.

In the aforementioned technical solution, by setting the dimensions of the first glue-applied portion and the predetermined wall within the aforementioned ratio range, the dimension of the first glue-applied portion can be further made sufficiently large, ensuring that the adhesion force between the first glue-applied portion and the box can guarantee the stability of the region where the pressure relief portion is located. At the same time, the width of the first glue-applied portion will not be made too large, leaving sufficient installation space for the pressure relief portion in the second direction, thereby achieving reasonable installation of the pressure relief portion.

In some embodiments, the predetermined wall has a second glue-applied portion, the second glue-applied portion being located on the other two opposite sides of the pressure relief portion.

In some embodiments, the predetermined wall has a first direction and a second direction, the first glue-applied portion extending along the first direction, the second direction being perpendicular to the first direction, and the second glue-applied portion extending along the second direction.

In the aforementioned technical solution, by providing the first glue-applied portion and the second glue-applied portion, the first glue-applied portion and the second glue-applied portion cooperate to be distributed around the pressure relief portion. In this way, when the battery cell is installed in the box of the battery, the pressure relief portion is adhered and fixed to the inner wall of the box at multiple positions in the circumferential direction, forming an annular adhesion region, so that when an expansion force is generated inside the electrode assembly, the expansion force can be transmitted from any position in the circumferential direction of the pressure relief portion to the box through the adhesive glue, without directly acting on the region where the pressure relief portion is located, thereby reducing the structural deformation of the pressure relief portion due to the expansion force, reducing the risk of score line cracking, and improving the safety and reliability of the installation of the pressure relief portion.

In some embodiments, in the first direction, a dimension of the second glue-applied portion is L3, and a dimension of the pressure relief portion is L1, wherein 0.15 ≤ L3/L1 ≤ 1.5.

In the aforementioned technical solution, the length of the second glue-applied portion along the first direction may be set to be equal to the length of the pressure relief portion along the first direction, or the length of the second glue-applied portion along the first direction may be set to be smaller than the length of the pressure relief portion along the first direction, thereby facilitating the enhancement of the adhesion effect of the second glue-applied portions on both sides of the pressure relief portion. It can be understood that, during actual installation, the predetermined wall is adhered and fixed to the inner wall of the box of the battery through the second glue-applied portions on both sides of the pressure relief portion along the second direction, and setting the aforementioned ratio to be greater than or equal to 0.15 can ensure that the adhesion area between the second glue-applied portion and the box can generate an effective adhesion force on both sides of the pressure relief portion in the second direction, improving the connection stability therebetween, and setting the ratio of the two to be less than or equal to 1.5 can reduce waste of adhesive glue caused by an excessively large area of the second glue-applied portion, achieving reasonable arrangement of structural dimensions.

In some embodiments, a second gap is formed between the second glue-applied portion and the pressure relief portion, in the first direction, a dimension of the second gap being h2, where 3 mm ≤ h2 ≤ 15 mm.

In the aforementioned technical solution, by providing the second gap, sufficient glue overflow space is ensured on the inner side of the second glue-applied portion, achieving effective glue overflow at the second glue-applied portion, which can reduce the inward overflow of the adhesive glue of the second glue-applied portion toward the pressure relief portion, reducing the risk of glue overflow enhancing the adhesion of the score lines, and ensuring the reliability of the pressure relief portion.

In some embodiments, in the second direction, two opposite ends of the second glue-applied portion are connected to adjacent ones of the first glue-applied portions.

In the aforementioned technical solution, by configuring the first glue-applied portions and the second glue-applied portions to abut each other, each glue-applied portion can form a closed-loop structure in the circumferential direction of the pressure relief portion. In other words, there is no gap for force transmission between the first glue-applied portions and the second glue-applied portions. In this way, after the battery cell is installed in the box, the predetermined wall is adhered and fixed to the inner peripheral wall of the box through the adhesive glue at various positions in the circumferential direction of the pressure relief portion, and the pressure relief portion is surrounded by the adhesive glue, thereby well reducing the force outside the adhesive glue from passing through the adhesive glue into the pressure relief portion. That is, the internal expansion force generated by the electrode assembly can be well transmitted to the box, thereby reducing the structural deformation of the predetermined wall in the region where the pressure relief portion is located, making the protection effect more comprehensive, reducing force transmission through gaps between the glue-applied portions, and improving the safety of the pressure relief portion.

In some embodiments, the shell has a plurality of wall portions, one of the plurality of wall portions being the predetermined wall, and the electrode terminal being provided on at least one of the wall portions other than the predetermined wall.

In the aforementioned technical solution, the electrode terminal and the pressure relief portion can be respectively provided on different wall surfaces of the shell. In this way, the structure on the predetermined wall where the pressure relief portion is located will not experience structural interference with the electrode terminal. For example, when the first glue-applied portion or the second glue-applied portion is provided on the predetermined wall, there is no need to consider the issue of the first glue-applied portion and the second glue-applied portion avoiding the electrode terminal, making the provision of the first glue-applied portion and the second glue-applied portion more convenient and more efficient. At the same time, when glue overflows from the first glue-applied portion and the second glue-applied portion, the adhesive glue will not flow to the electrode terminal, thereby ensuring the safety of the electrode terminal.

In a second aspect, an embodiment of the present application further provides a battery, including: a box, the box having a target box wall; and the battery cell according to any one of the aforementioned embodiments, where the battery cell is provided in the box, the predetermined wall is disposed directly opposite to the target box wall, and the first glue-applied portion is connected to the target box wall.

In the aforementioned technical solution, through this arrangement, the predetermined wall of the battery cell can be fixed and adhered to the target box wall on the outer side of the pressure relief portion, so that when the electrode assembly of the battery cell expands internally, the expansion force can be transmitted to the outer side of the first glue-applied portion and transmitted to the box through the adhesive contact surface, achieving diffusion of the expansion force, thereby reducing the expansion force directly acting on the pressure relief portion, reducing the occurrence of score line cracking in the pressure relief portion, improving the safety of the pressure relief portion, reducing liquid leakage from the pressure relief portion, and improving the safety of the battery.

In some embodiments, a wall thickness of the target box wall is greater than a wall thickness of the predetermined wall.

In the aforementioned technical solution, the target box wall can be made less prone to deformation compared to the predetermined wall. Thus, after the predetermined wall and the target box wall are adhered and fixed through the glue-applied portions, the expansion force on the predetermined wall can act on the target box wall through the glue-applied portions, and after being subjected to the expansion force, the target box wall can effectively absorb the expansion force without undergoing significant deformation, thereby enhancing the structural strength of the predetermined wall and reducing the occurrence of deformation of the predetermined wall in the region where the pressure relief portion is located.

In some embodiments, a product of the wall thickness of the target box wall and a material tensile strength of the target box wall is M1, and a product of the wall thickness of the predetermined wall and a material tensile strength of the predetermined wall is M2, where M2 is greater than M1.

In the aforementioned technical solution, after the predetermined wall and the target box wall are adhered and fixed through the first glue-applied portion and the second glue-applied portion, the expansion force received on the predetermined wall can be transmitted to the target box wall through the first glue-applied portion and the second glue-applied portion. The target box wall has a strong deformation resistance, so that the target box wall can absorb the collision force through the glue-applied portions and enhance the overall deformation resistance of the predetermined wall, thereby reducing the occurrence of severe deformation of the predetermined wall in the region where the pressure relief portion is located, improving the safety of the pressure relief portion, and improving the reliability of the battery.

In a third aspect, an embodiment of the present application further provides an electrical apparatus, including the battery cell according to any one of the embodiments, or the battery according to any one of the embodiments.

Additional aspects and advantages of the present application will be set forth in part in the description which follows, and in part will be obvious from the description which follows, or may be learned by practice of the present application.

### BRIEF DESCRIPTION OF DRAWINGS

The aforementioned and/or additional aspects and advantages of the present application will become apparent and easily understood from the description of the embodiments in conjunction with the following drawings, in which:
FIG. 1 is a schematic diagram of an electrical apparatus according to some embodiments of the present application;
FIG. 2 is a schematic diagram of a battery according to some embodiments of the present application;
FIG. 3 is a schematic diagram of a battery cell at a predetermined wall according to some embodiments of the present application;
FIG. 4 is a schematic diagram of a battery cell at a predetermined wall according to some other embodiments of the present application;
FIG. 5 is a schematic top view of a battery cell according to some embodiments of the present application;
FIG. 6 is an exploded view of a battery cell according to some embodiments of the present application;
FIG. 7 is a schematic bottom view of a battery cell according to some embodiments of the present application;
FIG. 8 is a schematic bottom view of a battery cell according to some embodiments of the present application (pressure relief portion exploded);
FIG. 9 is a schematic top view of a battery cell according to some other embodiments of the present application;
FIG. 10 is an exploded view of a battery cell according to some other embodiments of the present application; and
FIG. 11 is a schematic diagram of a shell according to some other embodiments of the present application.

### Reference numerals:

vehicle 1000,
battery 100, box 11, first box body 111, second box body 112, target box wall 113,
battery cell 21, shell 211, predetermined wall 212, pressure relief portion 213, first glue-applied portion 214, non-glue-applied portion 215, first gap 216, second glue-applied portion 217, second gap 218, electrode assembly 22, electrode terminal 23, first direction X, second direction Y,
controller 200, motor 300.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the aforementioned description of the drawings are intended to cover non-exclusive inclusions. The terms "first," "second," and the like in the specification and the claims of the present application as well as the aforementioned drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "installing," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the aforementioned terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

"A plurality of" appearing in the present application means two or more (including two).

In the present application, the battery cell 21 may include a lithium-ion secondary battery, a lithium-ion primary battery, a lithium-sulfur battery, a sodium-lithium-ion battery, a sodium-ion battery, or a magnesium-ion battery, etc., which is not limited in the embodiments of the present application. The battery cell 21 may be in the shape of a cylinder, a flat body, a rectangular parallelepiped, or other shapes, etc., which is also not limited in the embodiments of the present application. The battery cell 21 is generally classified into three types according to the packaging method: cylindrical battery cell, prismatic battery cell, and pouch battery cell, which is not limited in the embodiments of the present application.

The battery 100 referred to in the embodiments of the present application refers to a single physical module that includes one or more battery cells 21 to provide higher voltage and capacity. For example, the battery 100 referred to in the present application may include a battery module or a battery pack, etc. The battery 100 generally includes a box 11 configured to package one or more battery cells 21 or a plurality of battery modules. The box 11 can reduce the influence of liquid or other foreign substances on the charging or discharging of the battery cells 21.

The battery cell 21 includes a shell 211, an electrode assembly 22, and an electrolyte solution. The shell 211 is used to accommodate the electrode assembly 22 and the electrolyte solution. The electrode assembly 22 is composed of a positive electrode plate, a negative electrode plate, and a separator. The battery cell 21 mainly relies on the movement of metal ions between the positive electrode plate and the negative electrode plate to operate.

Among them, the positive electrode plate includes a positive electrode current collector and a positive electrode active material layer, where a positive electrode active material layer is coated on a surface of the positive electrode current collector, the positive electrode current collector not coated with the positive electrode active material layer protrudes beyond the positive electrode current collector coated with the positive electrode active material layer, and the positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, or lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

The separator may be made of a material such as polypropylene (PP) or polyethylene (PE). In addition, the electrode assemblies 22 may be of a wound structure or a laminated structure, and examples of the present application are not limited thereto.

In recent years, new energy vehicles have made significant advancements. In the field of electric vehicles, power batteries, as the sources of power for electric vehicles, play an irreplaceable important role. The battery 100 consists of a box 11 and a plurality of battery cells 21 accommodated in the box 11. Among them, as a core component of a new energy vehicle, the battery 100 has high requirements in terms of both safety and cycle life.

Generally speaking, during the cyclic charging and discharging process of the electrode assembly 22, the electrode assembly 22 experiences hard expansion. In particular, deformation in the plane where the pressure relief portion 213 is located easily pulls the score lines on the pressure relief portion 213, leading to liquid leakage from the pressure relief portion 213, resulting in poor safety. Although some technical solutions adopt thickening the box 11 of the battery cell 21 to solve the problem of liquid leakage from the pressure relief portion 213 caused by deformation of the box 11, thickening the box 11 greatly affects the volumetric energy density of the electrode assembly 22.

Based on the aforementioned considerations, in order to solve the problem of cracking of the score lines of the pressure relief portion 213 due to pulling, the inventors of the present application have designed a battery cell 21. The battery cell 21 is provided with glue on the side surface where the pressure relief portion 213 is located to adhere to the box 11 of the battery 100. The glue can adhere the side surface where the pressure relief portion 213 of the battery cell 21 is located to the inner wall of the box 11, so that this side surface is relatively fixed to the box 11, thereby reducing excessive pulling of the side surface where the pressure relief portion 213 is located due to expansion of the electrode assembly 22 of the battery cell 21, so that the pressure relief portion 213 is less affected by the expansion of the electrode assembly 22, thereby well reducing liquid leakage caused by rupture of the pressure relief portion 213, improving the safety of the battery cell 21, and eliminating the need to adopt a method of thickening the box 11, which is beneficial to ensuring the volumetric energy density of the electrode assembly 22, thereby improving the overall safety of the battery 100.

The battery 100 disclosed in the embodiments of the present application may be used, but is not limited to, in electrical apparatuses such as a vehicle 1000, a ship, or an aircraft. The battery cell 21 and the battery 100 disclosed in the present application can be used, which is beneficial to improving the safety of the battery 100, thereby ensuring the electrical safety of an electrical apparatus such as a vehicle 1000.

Embodiments of the present application provide an electrical apparatus 100 that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric car toys, electric ship toys, electric airplane toys, and the like. The spacecraft may include airplanes, rockets, space shuttles, spaceships, and the like.

For the convenience of description in the following embodiments, an electrical apparatus being a vehicle 1000 according to an embodiment of the present application is taken as an example for the description.

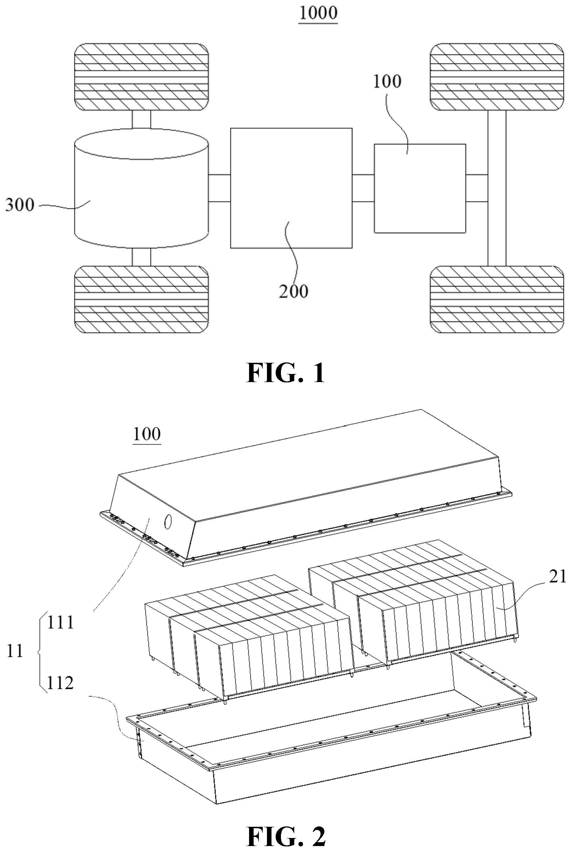

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is provided inside the vehicle 1000, and the battery 100 may be disposed at a bottom, or head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 can not only be used as the operating power source for the vehicle 1000, but also as the driving power source for the vehicle 1000, to replace or partially replace fuel or natural gas to provide driving power for the vehicle 1000.

Please refer to FIG. 2. FIG. 2 is an exploded structural view of a battery 100 provided in some embodiments of the present application. The battery 100 includes a box 11 and a plurality of battery cells 21, the battery cells 21 being used to be accommodated in the box 11. Here, the box 11 is used to provide an assembly space for the battery cells 21, and the box 11 may adopt a variety of structures. In some embodiments, the box 11 may include a first box body 111 and a second box body 112, the first box body 111 and the second box body 112 covering each other, and the first box body 111 and the second box body 112 together defining the assembly space for accommodating the battery cells 21. The second box body 112 may be a hollow structure with one end open, and the first box body 111 may be a plate-like structure, where the first box body 111 covers the open side of the second box body 112, so that the first box body 111 and the second box body 112 together define the assembly space; and the first box body 111 and the second box body 112 may also both be hollow structures with one side open, the open side of the first box body 111 covering the open side of the second box body 112. Certainly, the box 11 formed by the first box body 111 and the second box body 112 may have various shapes, such as a cylinder, a rectangular parallelepiped, etc.

In the battery 100, the plurality of battery cells 21 may be connected in series, in parallel, or in a combination thereof. The combination refers to a mixture of series and parallel connections among the plurality of battery cells 21. The plurality of battery cells 21 may be directly connected in series, in parallel, or in a combination thereof, and then the whole formed by the plurality of battery cells 21 is accommodated in the box 11. Certainly, the battery 100 may also have the plurality of battery cells 21 connected in series, in parallel, or in a combination thereof to form battery 100 modules, and then a plurality of battery 100 modules are connected in series, in parallel, or in a combination thereof to form a whole, and accommodated in the box 11. The battery 100 may also include other structures. For example, the battery 100 may further include a busbar component for achieving electrical connection between the plurality of battery cells 21.

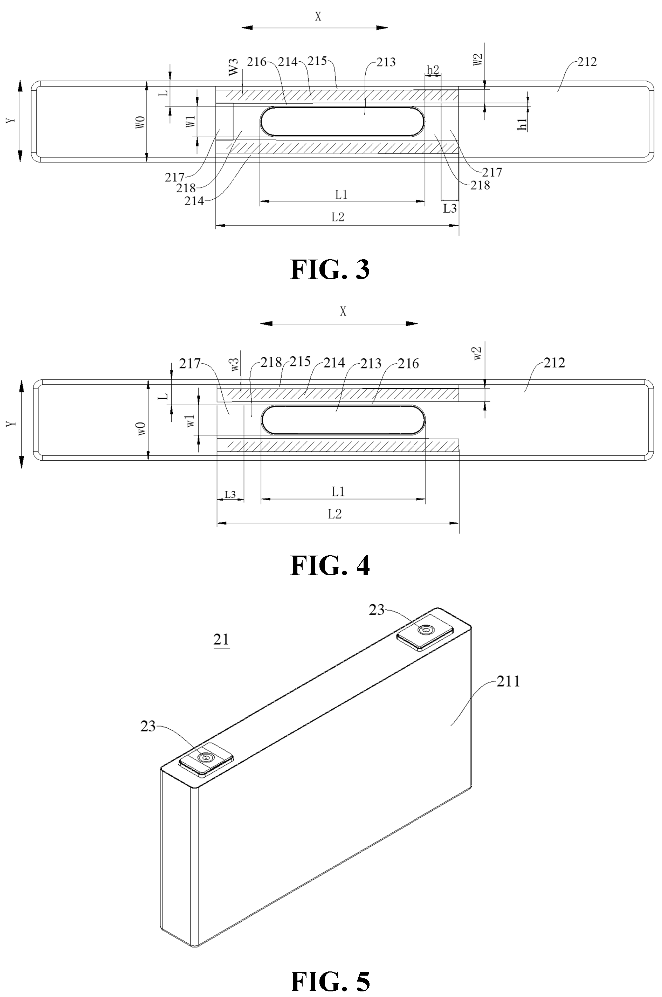

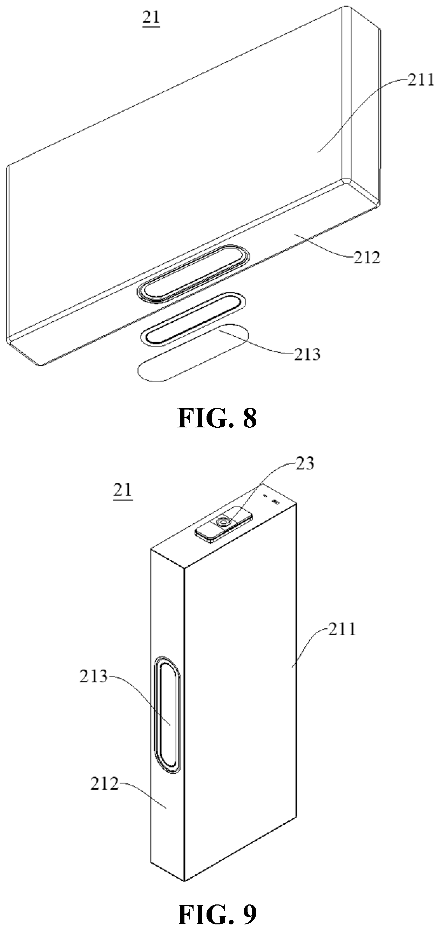

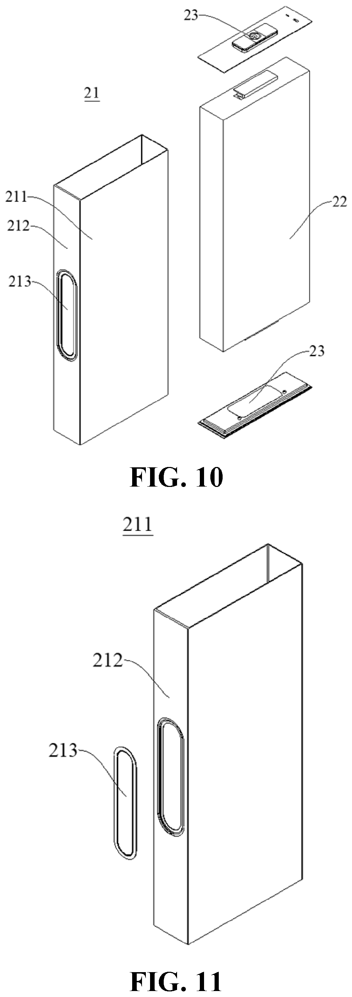

The battery cell 21 according to embodiments of the present application will be described below with reference to FIGS. 3 to 11, including: a shell 211, an electrode assembly 22, and an electrode terminal 23.

The electrode assembly 22 is provided in the shell 211, and the electrode assembly 22 is composed of a positive electrode plate, a negative electrode plate, and a separator. The battery cell 21 mainly relies on the movement of metal ions between the positive electrode plate and the negative electrode plate to operate. The electrode terminal 23 is provided on the shell 211 and is electrically connected to the electrode assembly 22, where the electrode terminal 23 may be a terminal post, and the terminal post includes a positive terminal post and a negative terminal post. As shown in FIGS. 3 and 4, the positive terminal post and the negative terminal post are provided on the top of the battery cell 21, and the positive terminal post and the negative terminal post are spaced apart from each other on a cover plate of the battery cell 21. As shown in FIG. 4, the positive electrode plate is formed with a positive electrode tab, the positive electrode tab being electrically connected to the positive terminal post, and the negative electrode plate is formed with a negative electrode tab, the negative electrode tab being electrically connected to the negative terminal post.

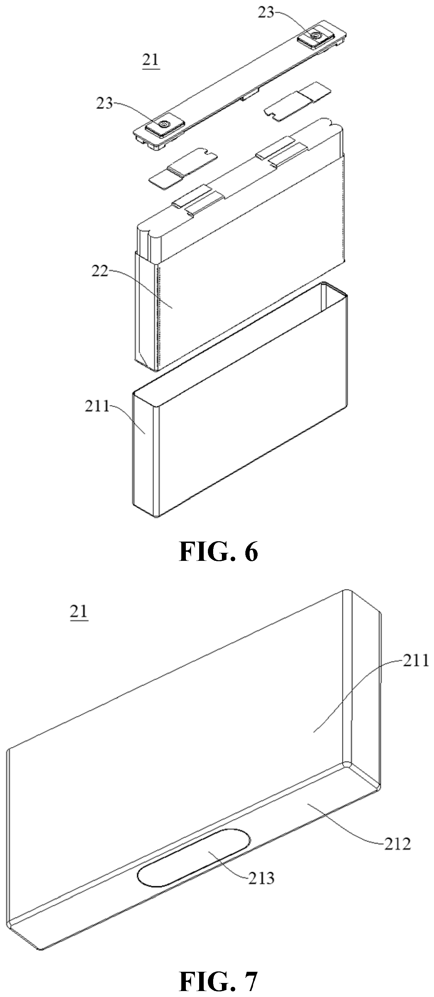

The shell 211 has a predetermined wall 212, and the predetermined wall 212 is provided with a pressure relief portion 213 and a first glue-applied portion 214, where the first glue-applied portion 214 is provided on two opposite sides of the pressure relief portion 213. In other words, during actual design, the first glue-applied portion 214 may be arranged in two groups. The two groups of the first glue-applied portion 214 and the pressure relief portion 213 are both provided on the predetermined wall 212, and the two groups of the first glue-applied portion 214 are respectively located on two sides of the pressure relief portion 213. Here, it should be noted that the predetermined wall 212 may be a bottom wall of the shell 211, or may be a side wall of the shell 211. As shown in FIGS. 5 and 6, the predetermined wall 212 is the bottom wall of the shell 211, and the pressure relief portion 213 is provided on the bottom wall of the shell 211. Alternatively, as shown in FIGS. 7 to 9, the predetermined wall 212 is a side wall of the shell 211, and the pressure relief portion 213 is provided on the side wall of the shell 211. The pressure relief portion 213 may include, but is not limited to, an explosion-proof sheet, an explosion-proof valve, a safety valve, and the like. Among them, the pressure relief portion 213 may be provided with a score line, and the score line is a structurally weak portion of the pressure relief portion 213.

Thus, when the battery cell 21 is installed in the box 11 of the battery 100, the outer side surfaces of the battery cell 21 are disposed opposite to the inner side surfaces of the box 11, respectively, and after installation and fixation, the first glue-applied portion 214 can be adhered and fixed to the inner side surface of the box 11, so that the position of the battery cell 21 in the box 11 is relatively stable. As an example, as shown in FIGS. 4 and 5, the bottom wall of the battery cell 21 is configured as the predetermined wall 212, and the pressure relief portion 213 is provided on the bottom wall of the battery cell 21. Meanwhile, two sides of the battery cell 21 in the width direction of the pressure relief portion 213 are each provided with the first glue-applied portion 214, so that after the battery cell 21 is installed in the box 11, the bottom wall of the shell 211 is adhered to the inner wall of the box 11 through the two first glue-applied portions 214, so as to relatively fix the bottom wall of the shell 211 to the inner bottom wall of the box 11. In this way, when the electrode assembly 22 undergoes long-term charging and discharging and expands internally, the bottom wall of the shell 211 is adhered to the box 11 through the first glue-applied portions 214, which can reduce the deformation of the bottom wall of the shell 211, i.e., the wall surface where the pressure relief portion 213 is located, as the electrode assembly 22 expands, thereby reducing the occurrence of cracking at the score line of the pressure relief portion 213, lowering the risk of liquid leakage from the pressure relief portion 213, and improving the stability and reliability of the pressure relief portion 213.

In some embodiments, the predetermined wall 212 has a first direction X, the first glue-applied portion 214 extending along the first direction X, and in the first direction X, a dimension of the pressure relief portion 213 being L1, and a dimension of the first glue-applied portion 214 being L2. Here, the first direction X may be the length direction of the predetermined wall 212, as shown in FIGS. 3 and 4, where the left-right direction in the drawings is the first direction X.

Here, 1.0 ≤ L2/L1 ≤ 2.0. Thus, the ratio of the extension dimension of the first glue-applied portion 214 along the first direction X to the extension dimension of the pressure relief portion 213 along the first direction X may be set to be between 1.0 and 2.0. As an example, L2/L1 may include, but is not limited to, 1.0, 1.1, 1.2, 1.3, 1.4, 1.5, 1.6, 1.7, 1.8, 1.9, 2.0, etc.

Thus, the length of the first glue-applied portion 214 along the first direction X is set to be greater than the length of the pressure relief portion 213 along the first direction X, so that the first glue-applied portion 214 can cover various regions on both sides of the pressure relief portion 213 in the first direction X, thereby facilitating the enhancement of the adhesion effect of the first glue-applied portions 214 on both sides of the pressure relief portion 213. It can be understood that, during actual installation, the predetermined wall 212 is adhered and fixed to the inner wall of the box 11 of the battery 100 on both sides of the pressure relief portion 213 along the first direction X through the first glue-applied portions 214, and an extension length of the adhesion region along the first direction X is greater than that of the pressure relief portion 213, so that the adhesion region can comprehensively cover the pressure relief portion 213 from both sides. In this way, when the electrode assembly 22 expands, the force transmitted to the predetermined wall 212 can be absorbed to a maximum extent by the first glue-applied portions 214 on both sides, reducing the force transmitted to the pressure relief portion 213 through uncovered regions, thereby enhancing the protection effect on the pressure relief portion 213 and improving the safety of the battery cell 21.

In some embodiments, L2/L1 ≤ 1.5. That is to say, during actual design, the ratio of the extension dimension of the first glue-applied portion 214 along the first direction X to the extension dimension of the pressure relief portion 213 along the first direction X may be set to be between 1.0 and 1.5. As an example, L2/L1 may be 1.3, or 1.2, 1.4, etc.

Thus, the extension length of the first glue-applied portion 214 along the first direction X is not only greater than that of the pressure relief portion 213 but also closer to that of the pressure relief portion 213. This enables the first glue-applied portion 214 not only to structurally strengthen the regions on both sides of the pressure relief portion 213 by means of adhesion, but also to prevent the length of the first glue-applied portion 214 from being too large, thereby avoiding waste of the glue-applied region, while also reducing the occupation of adhesion space under the premise of ensuring adhesion strength.

In addition, it can be understood that after adhesion through the first glue-applied portion 214, it is not only possible to ensure the safety at the pressure relief portion 213, but also to reduce excessively tight adhesion caused by the first glue-applied portion 214. That is, the risk of the first glue-applied portion 214 adhering to the entirety of the predetermined wall 212 is lowered, so that the predetermined wall 212 can absorb a certain amount of expansion force generated by the electrode assembly 22 while ensuring the safety of the pressure relief portion 213, thereby reducing the risk of excessively tight internal compression of the electrode assembly 22, and improving the rationality of the overall arrangement.

According to some embodiments of the present application, the predetermined wall 212 has a first direction X and a second direction Y, the first glue-applied portion 214 extending along the first direction X, and the second direction Y being perpendicular to the first direction X. That is to say, the first direction X and the second direction Y may be two mutually perpendicular directions on the predetermined wall 212. For example, the first direction X is along the length direction of the predetermined wall 212, and the second direction Y is along the width direction of the predetermined wall 212; or the first direction X is along the width direction of the predetermined wall 212, and the second direction Y is along the length direction of the predetermined wall 212. As an example, as shown in FIGS. 3 and 4, the first direction X is along the length direction of the predetermined wall 212, i.e., the left-right direction in the drawings, and the second direction Y is the width direction, i.e., the up-down direction in the drawings.

Here, in the second direction Y, a dimension of the pressure relief portion 213 is W1, and a dimension of the first glue-applied portion 214 is W2, 0.3 ≤ W2/W1 ≤ 1.0. That is, in the second direction Y, the dimension of the pressure relief portion 213 is greater than the dimension of the first glue-applied portion 214. As shown in FIGS. 3 and 4, the second direction Y is the width direction of the predetermined wall 212 in the drawings, and the ratio of the width dimension of the first glue-applied portion 214 to the width dimension of the pressure relief portion 213 is between 0.3 and 1.0. For example, the ratio W2/W1 may include, but is not limited to, 0.3, 0.4, 0.5, 0.6, 0.7, 0.8, 0.9, 1.0, etc.

In addition, in some embodiments, 0.4 ≤ W2/W1 ≤ 0.7. For example, W2/W1 may be, but is not limited to, 0.4, 0.45, 0.52, 0.55, 0.58, 0.60, 0.62, 0.63, 0.65, 0.68, 0.7, etc.

Thus, setting the dimensions of the first glue-applied portion 214 and the pressure relief portion 213 in the second direction Y within the aforementioned range can prevent the width dimension of the first glue-applied portion 214 from being too small, which consequently ensures sufficient adhesion area between the predetermined wall 212 and the inner wall of the box 11, and improves the adhesion stability therebetween, thereby effectively reducing the deformation of the predetermined wall 212 in the region where the pressure relief portion 213 is located. At the same time, the coated area of the first glue-applied portion 214 will not be too large, reducing glue-applying waste, and a deformation region is reserved in a region outside the first glue-applied portion 214 to achieve expansion and collapse while ensuring the safety of the pressure relief portion 213, thereby improving the internal safety of the battery cell 21.

According to some embodiments of the present application, the predetermined wall 212 is provided with a non-glue-applied portion 215, the non-glue-applied portion 215 being provided on a side of the first glue-applied portion 214 away from the pressure relief portion 213. That is, on both sides of the pressure relief portion 213, both the first glue-applied portions 214 and the non-glue-applied portions 215 are included. As shown in FIGS. 3 and 4, there are two first glue-applied portions 214 respectively located on the upper and lower sides of the pressure relief portion 213, and one non-glue-applied portion 215 is formed above the first glue-applied portion 214 located above, while one non-glue-applied portion 215 is also formed below the first glue-applied portion 214 located below. In other words, non-glue-applied portions 215 are formed in the outermost regions on both the upper and lower sides of the predetermined wall 212.

Thus, by providing the non-glue-applied portions 215, a blank glue overflow region can be formed on the outer side of the first glue-applied portion 214. In other words, when glue is applied to the first glue-applied portion 214 and the battery cell 21 is installed in the box 11, the installation extrusion pressure allows the adhesive glue at the first glue-applied portion 214 to overflow toward the non-glue-applied portion 215, i.e., during installation, the adhesive glue at the first glue-applied portion 214 will not overflow from the predetermined wall 212, reducing the overflow of the adhesive glue to other regions.

In addition, the non-glue-applied portion 215 is a region of the predetermined wall 212 that is not adhered to the inner wall of the box 11. This region is spaced apart from the pressure relief portion 213, and the force applied thereto will not directly act on the pressure relief portion 213, and can absorb part of the expansion force from the interior of the electrode assembly 22, thereby both reducing the risk of damage to the pressure relief portion 213 and reducing the internal pressure of the electrode assembly 22. The non-glue-applied portion 215 can release the deformation stress of the shell 211, improving the safety of the battery cell 21.

In some embodiments, the predetermined wall 212 has a first direction X and a second direction Y, the first glue-applied portion 214 extending along the first direction X, and the second direction Y being perpendicular to the first direction X. That is to say, the first direction X and the second direction Y may be two mutually perpendicular directions on the predetermined wall 212. For example, the first direction X is along the length direction of the predetermined wall 212, and the second direction Y is along the width direction of the predetermined wall 212; or the first direction X is along the width direction of the predetermined wall 212, and the second direction Y is along the length direction of the predetermined wall 212. As an example, as shown in FIGS. 3 and 4, the first direction X is along the length direction of the predetermined wall 212, i.e., the left-right direction in the drawings, and the second direction Y is the width direction, i.e., the up-down direction in the drawings.

Here, in the second direction Y, a dimension of the non-glue-applied portion 215 is W3, and a dimension of the predetermined wall 212 is WO, where 0.05 ≤ W3/WO ≤ 0.2. That is, in the second direction Y, the ratio of the dimension of the non-glue-applied portion 215 to the dimension of the predetermined wall 212 is in the range of 0.1 to 0.2. As shown in FIGS. 3 and 4, the second direction Y is the width direction of the predetermined wall 212 in the drawings, and the ratio of the width dimension of the non-glue-applied portion 215 to the dimension of the predetermined wall 212 is between 0.05 and 0.2. For example, the ratio W3/WO may include, but is not limited to, 0.05, 0.07, 0.1, 0.12, 0.14, 0.15, 0.16, 0.18, 0.20, etc.

In addition, in some embodiments, 0.08 ≤ W3/WO ≤ 0.15. For example, W3/WO may include, but is not limited to, 0.08, 0.09, 0.11, 0.12, 0.15, etc.

Thus, setting the dimensions of the non-glue-applied portion 215 and the predetermined wall 212 in the second direction Y within the aforementioned range can prevent the width dimension of the non-glue-applied portion 215 from being too small, thereby ensuring sufficient glue overflow space on the outer side of the first glue-applied portion 214, achieving effective glue overflow at the first glue-applied portion 214. Certainly, the width dimension of the non-glue-applied portion 215 can also be prevented from being too large, reducing the space occupation of the non-glue-applied portion 215, balancing the width dimension of the first glue-applied portion 214, and ensuring the reliability of adhesion.

In some embodiments, a first gap 216 is formed between the first glue-applied portion 214 and the pressure relief portion 213. In other words, the first glue-applied portion 214 and the pressure relief portion 213 may be spaced apart from each other, with the first gap 216 reserved therebetween. In this way, the adhesive glue at the first glue-applied portion 214 can be reduced from directly adhering to or flowing toward the pressure relief portion 213. Similarly, the first gap 216 can also serve as a glue overflow region for the first glue-applied portion 214.

The predetermined wall 212 has a first direction X and a second direction Y, the first glue-applied portion 214 extending along the first direction X, and the second direction Y being perpendicular to the first direction X. That is to say, the first direction X and the second direction Y may be two mutually perpendicular directions on the predetermined wall 212. For example, the first direction X is along the length direction of the predetermined wall 212, and the second direction Y is along the width direction of the predetermined wall 212; or the first direction X is along the width direction of the predetermined wall 212, and the second direction Y is along the length direction of the predetermined wall 212. As an example, as shown in FIGS. 3 and 4, the first direction X is along the length direction of the predetermined wall 212, i.e., the left-right direction in the drawings, and the second direction Y is the width direction, i.e., the up-down direction in the drawings.

In the second direction Y, a dimension of the first gap 216 is h1, where 3 mm ≤ h1 ≤ 15 mm. That is, in the second direction Y, the dimension of the first gap 216 may be set within the range of 3 mm to 15 mm. As shown in FIGS. 3 and 4, the second direction Y is the width direction of the predetermined wall 212 in the drawings, and the width dimension of the first gap 216 may be set to 3 mm, 4 mm, 5 mm, 6 mm, 7 mm, 8 mm, 9 mm, 10 mm, 11 mm, 12 mm, 13 mm, 14 mm, 15 mm, etc.

Thus, by providing the first gap 216, sufficient glue overflow space is ensured on the inner side of the first glue-applied portion 214, achieving effective glue overflow at the first glue-applied portion 214. In this way, glue overflow spaces are formed on both the inner side and the outer side of the first glue-applied portion 214, which can not only reduce the overflow of the adhesive glue of the first glue-applied portion 214 to the outside of the predetermined wall 212, but also reduce the inward overflow of the adhesive glue of the first glue-applied portion 214 toward the pressure relief portion 213, reducing the risk of glue overflow enhancing the adhesion of the score lines, and ensuring the reliability of the pressure relief portion 213.

According to some embodiments of the present application, the predetermined wall 212 has a first direction X and a second direction Y, the first glue-applied portion 214 extending along the first direction X, and the second direction Y being perpendicular to the first direction X. That is to say, the first direction X and the second direction Y may be two mutually perpendicular directions on the predetermined wall 212. For example, the first direction X is along the length direction of the predetermined wall 212, and the second direction Y is along the width direction of the predetermined wall 212; or the first direction X is along the width direction of the predetermined wall 212, and the second direction Y is along the length direction of the predetermined wall 212. As an example, as shown in FIGS. 3 and 4, the first direction X is along the length direction of the predetermined wall 212, i.e., the left-right direction in the drawings, and the second direction Y is the width direction, i.e., the up-down direction in the drawings.

Here, in the second direction Y, one of the two opposite edges of the first glue-applied portion 214 abuts the edge of the predetermined wall 212, and the other one abuts the edge of the pressure relief portion 213. That is to say, in the second direction Y, i.e., the width direction of the predetermined wall 212, such as the up-down direction in FIG. 3, the first glue-applied portion 214 is located in a region of the predetermined wall 212 other than the pressure relief portion 213. In other words, the width of the first glue-applied portion 214 along the second direction Y is equal to the distance between the edge of the predetermined wall 212 and the edge of the pressure relief portion 213, so that the regions of the predetermined wall 212 on both sides of the pressure relief portion 213 in the second direction Y are both glue-applied regions of the first glue-applied portion 214. Thus, the area of the adhesion region of the predetermined wall 212 outside the pressure relief portion 213 can be increased, improving the adhesion stability between the predetermined wall 212 and the box 11, thereby reducing the influence of the internal expansion of the electrode assembly 22 on the pressure relief portion 213.

In some embodiments, the predetermined wall 212 has a first direction X and a second direction Y, the first glue-applied portion 214 extending along the first direction X, and the second direction Y being perpendicular to the first direction X, and the predetermined wall 212 is provided with a non-glue-applied portion 215, the non-glue-applied portion 215 being provided on a side of the first glue-applied portion 214 away from the pressure relief portion 213, and in the second direction Y, a dimension of the first glue-applied portion 214 being W2, and a dimension of the non-glue-applied portion 215 being W3, where 0.4 ≤ W3/W2 ≤ 1.0. That is, in the second direction Y, the ratio of the dimension of the first glue-applied portion 214 to the dimension of the non-glue-applied portion 215 is between 0.4 and 1.0. For example, the ratio W3/W2 of the two may be 0.4, 0.41, 0.45, 0.46, 0.52, 0.53, 0.56, 0.61, 0.73, 0.85, 0.91, 1.0, etc. Thus, the first glue-applied portion 214 with a sufficient dimensional ratio can be provided on both sides of the pressure relief portion 213, ensuring the glue-applied area of the predetermined wall 212 in the second direction Y, thereby ensuring the adhesion area between the predetermined wall 212 and the box 11.

Thus, by setting the dimensions of the first glue-applied portion 214 and the predetermined wall 212 within the aforementioned ratio range, the dimension of the first glue-applied portion 214 can be made sufficiently large, ensuring that the adhesion force between the first glue-applied portion 214 and the box 11 can guarantee the stability of the region where the pressure relief portion 213 is located. At the same time, the width of the first glue-applied portion 214 will not be made too large, leaving sufficient installation space for the pressure relief portion 213 in the second direction Y, thereby achieving reasonable installation of the pressure relief portion 213.

In addition, in some embodiments, 0.6 ≤ W3/W2 ≤ 0.8. The ratio W3/W2 of the two may be 0.6, 0.62, 0.65, 0.74, 0.78, 0.8, etc. Thus, the dimension of the first glue-applied portion 214 can be further made sufficiently large, ensuring that the adhesion force between the first glue-applied portion 214 and the box 11 can guarantee the stability of the region where the pressure relief portion 213 is located. At the same time, the width of the first glue-applied portion 214 will not be made too large, leaving sufficient installation space for the pressure relief portion 213 in the second direction Y, thereby achieving reasonable installation of the pressure relief portion 213.

In some embodiments, the predetermined wall 212 has a second glue-applied portion 217, the second glue-applied portion 217 being located on the other two opposite sides of the pressure relief portion 213. In other words, the first glue-applied portions 214 and the second glue-applied portions 217 may be respectively provided on two sides of the pressure relief portion 213 in two different directions, so that the two first glue-applied portions 214 and the two second glue-applied portions 217 can be distributed around the pressure relief portion 213, thereby allowing the predetermined wall 212 to have a good adhesion effect around the pressure relief portion 213, ensuring adhesion stability.

In some embodiments, the predetermined wall 212 has a first direction X and a second direction Y, the first glue-applied portion 214 extending along the first direction X, and the second direction Y being perpendicular to the first direction X. That is to say, the first direction X and the second direction Y may be two mutually perpendicular directions on the predetermined wall 212. For example, the first direction X is along the length direction of the predetermined wall 212, and the second direction Y is along the width direction of the predetermined wall 212; or the first direction X is along the width direction of the predetermined wall 212, and the second direction Y is along the length direction of the predetermined wall 212. As an example, as shown in FIGS. 3 and 4, the first direction X is along the length direction of the predetermined wall 212, i.e., the left-right direction in the drawings, and the second direction Y is the width direction, i.e., the up-down direction in the drawings.

The second glue-applied portion 217 extends along the second direction Y. That is, the second glue-applied portion 217 is also configured to be in an elongated strip shape, and the extension direction of the first glue-applied portion 214 is perpendicular to that of the second glue-applied portion 217. There are two first glue-applied portions 214 provided on both sides of the pressure relief portion 213 along the first direction X, and they are distributed in an elongated strip shape. There are two second glue-applied portions 217 provided on both sides of the pressure relief portion 213 along the second direction Y, and they are distributed in an elongated strip shape. In other words, the pressure relief portion 213 may be provided not only with two groups of first glue-applied portions 214 on both sides in the first direction X, but also with second glue-applied portions 217 on both sides in the second direction Y, so that both the first glue-applied portions 214 and the second glue-applied portions 217 play a role in adhesion reinforcement. The elongated glue-applied portions have a larger surface area, thereby helping to increase the adhesion area between the predetermined wall 212 and the inner wall of the box 11, and ensuring the connection reliability between the region of the predetermined wall 212 where the pressure relief portion 213 is located and the box 11.

As an example, as shown in FIG. 3, the predetermined wall 212 is provided with first glue-applied portions 214 on both sides of the pressure relief portion 213 in the first direction X, that is, the upper side and the lower side, and at the same time, the predetermined wall 212 is provided with second glue-applied portions 217 on both sides of the pressure relief portion 213 in the second direction Y, i.e., the left side and the right side, so that the first glue-applied portions 214 and the second glue-applied portions 217 are distributed in an annular shape on the outer side of the pressure relief portion 213, thereby forming a glue-applied structure in the circumferential direction of the pressure relief portion 213.

Thus, by providing the first glue-applied portion 214 and the second glue-applied portion 217, the first glue-applied portion 214 and the second glue-applied portion 217 cooperate to be distributed around the pressure relief portion 213. In this way, when the battery cell 21 is installed in the box 11 of the battery 100, the pressure relief portion 213 is adhered and fixed to the inner wall of the box 11 at multiple positions in the circumferential direction, forming an annular adhesion region, so that when an expansion force is generated inside the electrode assembly 22, the expansion force can be transmitted from any position in the circumferential direction of the pressure relief portion 213 to the box 11 through the adhesive glue, without directly acting on the region where the pressure relief portion 213 is located, thereby reducing the structural deformation of the pressure relief portion 213 due to the expansion force, reducing the risk of score line cracking, and improving the safety and reliability of the installation of the pressure relief portion 213.

In some embodiments, in the first direction X, a dimension of the second glue-applied portion 217 is L3, and a dimension of the pressure relief portion 213 is L1, where 0.15 ≤ L3/L1 ≤ 1.5. The first direction X may be the length direction of the predetermined wall 212, as shown in FIGS. 1 and 2, where the left-right direction in the drawings is the first direction X. Thus, the ratio of the extension dimension of the second glue-applied portion 217 along the first direction X to the extension dimension of the pressure relief portion 213 along the first direction X may be set to be between 0.15 and 1.5. As an example, L3/L1 may be 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.05, 1.1, 1.15, 1.2, 1.25, 1.3, 1.35, 1.4, 1.45, 1.5, etc.

Thus, the length of the second glue-applied portion 217 along the first direction X may be set to be equal to the length of the pressure relief portion 213 along the first direction X, or the length of the second glue-applied portion 217 along the first direction X may be set to be smaller than the length of the pressure relief portion 213 along the first direction X, thereby facilitating the enhancement of the adhesion effect of the second glue-applied portions 217 on both sides of the pressure relief portion 213. It can be understood that, during actual installation, the predetermined wall 212 is adhered and fixed to the inner wall of the box 11 of the battery 100 through the second glue-applied portions 217 on both sides of the pressure relief portion 213 along the second direction Y, and setting the aforementioned ratio to be greater than or equal to 0.15 can ensure that the adhesion area between the second glue-applied portion 217 and the box 11 can generate an effective adhesion force on both sides of the pressure relief portion 213 in the second direction Y, improving the connection stability therebetween, and setting the ratio of the two to be less than or equal to 1.5 can reduce waste of adhesive glue caused by an excessively large area of the second glue-applied portion 217, achieving reasonable arrangement of structural dimensions.

In some embodiments, a second gap 218 is formed between the second glue-applied portion 217 and the pressure relief portion 213. In other words, the second glue-applied portion 217 and the pressure relief portion 213 may be spaced apart from each other, with the second gap 218 reserved therebetween. In this way, the adhesive glue at the second glue-applied portion 217 can be reduced from directly adhering to or flowing toward the pressure relief portion 213. Similarly, the second gap 218 can also serve as a glue overflow region for the second glue-applied portion 217.

In the first direction X, a dimension of the second gap 218 is h2, where 3 mm ≤ h2 ≤ 15 mm. That is, in the first direction X, the dimension of the second gap 218 may be set within the range of 3 mm to 15 mm. As shown in FIGS. 3 and 4, the first direction X is the length direction of the predetermined wall 212 in the drawings, and the width dimension of the second gap 218 may be set to 3 mm, 4 mm, 5 mm, 6 mm, 7 mm, 8 mm, 9 mm, 10 mm, 11 mm, 12 mm, 13 mm, 14 mm, 15 mm, etc.

Thus, by providing the second gap 218, sufficient glue overflow space is ensured on the inner side of the second glue-applied portion 217, achieving effective glue overflow at the second glue-applied portion 217, which can reduce the inward overflow of the adhesive glue of the second glue-applied portion 217 toward the pressure relief portion 213, reducing the risk of glue overflow enhancing the adhesion of the score lines, and ensuring the reliability of the pressure relief portion 213.

In some embodiments, in the second direction Y, two opposite ends of the second glue-applied portion 217 are connected to adjacent ones of the first glue-applied portions 214. That is, the end portions of the first glue-applied portions 214 are connected to the end portions of the second glue-applied portion 217. As shown in FIG. 3, there are two first glue-applied portions 214, and the two first glue-applied portions 214 are parallel and spaced apart from each other. Meanwhile, there are two second glue-applied portions 217, and the two second glue-applied portions 217 are parallel and spaced apart from each other. Two ends of each first glue-applied portion 214 are respectively connected to the end portions of the two second glue-applied portions 217, so that the first glue-applied portions 214 and the second glue-applied portion 217 are connected to form an annular structure distributed around the pressure relief portion 213.

Thus, by providing the first glue-applied portions 214 and the second glue-applied portions 217 connected to each other, the glue-applied portions can form a closed-loop structure in the circumferential direction of the pressure relief portion 213. In other words, there is no gap for force transmission between the first glue-applied portions 214 and the second glue-applied portions 217. In this way, after the battery cell 21 is installed in the box 11, the predetermined wall 212 is adhered and fixed to the inner peripheral wall of the box 11 through the adhesive glue at various positions in the circumferential direction of the pressure relief portion 213, and the pressure relief portion 213 is surrounded by the adhesive glue, thereby well reducing the force outside the adhesive glue from passing through the adhesive glue into the pressure relief portion 213. That is, the internal expansion force generated by the electrode assembly 22 can be well transmitted to the box 11, thereby reducing the structural deformation of the predetermined wall 212 in the region where the pressure relief portion 213 is located, making the protection effect more comprehensive, reducing force transmission through gaps between the glue-applied portions, and improving the safety of the pressure relief portion 213.

In some embodiments of the present application, the shell 211 has a plurality of wall portions, one of the plurality of wall portions being the predetermined wall 212, and the electrode terminal 23 being provided on at least one of the wall portions other than the predetermined wall 212. In this way, the electrode terminal 23 and the pressure relief portion 213 can be respectively provided on different wall portions of the shell 211, achieving a dispersed arrangement of the structures.

As an example, as shown in FIGS. 5 to 7, the shell 211 is configured as a rectangular parallelepiped shell, i.e., the shell 211 has six wall portions, where the bottom wall of the shell 211 is configured as the predetermined wall 212, and there are two electrode terminals 23 both provided on the top wall of the shell 211. In addition, as shown in FIGS. 7 to 9, one side wall of the shell 211 is configured as the predetermined wall 212, and one electrode terminal 23 is provided on each of the top wall and the bottom wall of the shell 211, with one being a positive terminal post and the other being a negative terminal post. That is, it can be understood that the battery cell 21 has terminal posts at two ends, and the pressure relief portion 213 is provided on the side portion. Alternatively, one side wall of the shell 211 is configured as the predetermined wall 212, and two electrode terminals 23 are provided on another side wall.

Thus, the electrode terminal 23 and the pressure relief portion 213 can be respectively provided on different wall surfaces of the shell 211. Thus, the structure on the predetermined wall 212 where the pressure relief portion 213 is located will not experience structural interference with the electrode terminal 23. For example, when the first glue-applied portion 214 or the second glue-applied portion 217 is provided on the predetermined wall 212, there is no need to consider the issue of the first glue-applied portion 214 and the second glue-applied portion 217 avoiding the electrode terminal 23, making the provision of the first glue-applied portion 214 and the second glue-applied portion 217 more convenient and more efficient. At the same time, when glue overflows from the first glue-applied portion 214 and the second glue-applied portion 217, the adhesive glue will not flow to the electrode terminal 23, thereby ensuring the safety of the electrode terminal 23.

According to an embodiment of the present application, the top wall of the battery cell 21 is provided with terminal posts, the bottom wall is provided with an explosion-proof valve, and the bottom wall is provided with a glue-applied portion, the glue-applied portion being provided on both sides of the explosion-proof valve along the length direction of the bottom wall.

According to another embodiment of the present application, the top wall and the bottom wall of the battery cell 21 are provided with terminal posts, a side wall is provided with an explosion-proof valve, and the side wall is provided with a glue-applied portion, the glue-applied portion being provided on both sides of the explosion-proof valve along the length direction of the side wall.

According to some embodiments of the present application, the present application further provides a battery 100, including a box 11 and the battery cell 21 according to any of the above embodiments, the battery cell 21 being provided in the box 11, and the box 11 having a target box wall 113, where the predetermined wall 212 is disposed directly opposite to the target box wall 113, and the first glue-applied portion 214 is connected to the target box wall 113. That is, the predetermined wall 212 is adhered to the inner side surface of the target box wall 113 through the first glue-applied portion 214, so that the battery cell 21 is relatively fixed to the box 11.

As an example, for example, the bottom wall of the shell 211 of the battery cell 21 is configured as the predetermined wall 212, and the bottom wall of the box 11 is the target box wall 113. When the battery cell 21 is installed in the box 11, the predetermined wall 212 is directly opposite to the bottom wall of the box 11 so that the two are adhered and fixed, and the gravity of the battery cell 21 can be utilized to make the adhesion between the first glue-applied portion 214 and the target box wall 113 more stable.

Thus, through this arrangement, the predetermined wall 212 of the battery cell 21 can be fixedly adhered to the target box wall 113 on the outer side of the pressure relief portion 213, so that when the electrode assembly 22 of the battery cell 21 expands internally, the expansion force can be transmitted to the outer side of the first glue-applied portion 214 and transmitted to the box 11 through the adhesive contact surface, achieving diffusion of the expansion force, thereby reducing the expansion force directly acting on the pressure relief portion 213, reducing the occurrence of score line cracking in the pressure relief portion 213, improving the safety of the pressure relief portion 213, and reducing liquid leakage from the pressure relief portion 213.

In addition, during actual installation, the pressure relief portion 213 is provided with the first glue-applied portions 214 on both sides in the first direction X and the second glue-applied portions 217 on both sides in the second direction Y, so that both the first glue-applied portions 214 and the second glue-applied portions 217 can be adhered to the target box wall 113, thereby allowing the forces in the circumferential direction of the pressure relief portion 213 to be transmitted to the target box wall 113 through the glue-applied portions in the corresponding regions, reducing the amount of deformation at the pressure relief portion 213, and improving the safety and reliability of the pressure relief portion 213.

In some embodiments, a wall thickness of the target box wall 113 is greater than a wall thickness of the predetermined wall 212. For example, the bottom wall of the shell 211 of the battery cell 21 is configured as the predetermined wall 212, the bottom wall of the box 11 is the target box wall 113, and the thickness of the bottom wall of the box 11 is greater than the thickness of the bottom wall of the shell 211.

Thus, the bottom wall of the box 11 can be made less prone to deformation compared to the bottom wall of the shell 211. Thus, after the predetermined wall 212 and the target box wall 113 are adhered and fixed through the glue-applied portions, the expansion force on the predetermined wall 212 can act on the target box wall 113 through the glue-applied portions, and after being subjected to the expansion force, the target box wall 113 can effectively absorb the expansion force without undergoing significant deformation, thereby enhancing the structural strength of the predetermined wall 212 and reducing the occurrence of significant deformation of the predetermined wall 212 in the region where the pressure relief portion 213 is located.

In some embodiments, a product of the wall thickness of the target box wall 113 and a material tensile strength of the target box wall 113 is M1, and a product of the wall thickness of the predetermined wall 212 and a material tensile strength of the predetermined wall 212 is M2, where M2 is greater than M1. Here, the product of the wall thickness of the target box wall 113 and the material tensile strength of the target box wall 113 can determine the structural strength of the target box wall 113. At the same time, the product of the wall thickness of the predetermined wall 212 and the material tensile strength of the predetermined wall 212 can determine the structural strength of the predetermined wall 212, and the larger the parameter, the greater the corresponding structural strength and the stronger the deformation resistance.

In other words, setting M2 to be greater than M1 can make the target box wall 113 less prone to structural deformation when the target box wall 113 and the predetermined wall 212 are subjected to the same force, which is beneficial to ensuring the stability of the target box wall 113.

Thus, after the predetermined wall 212 and the target box wall 113 are adhered and fixed through the first glue-applied portion 214 and the second glue-applied portion 217, the expansion force received on the predetermined wall 212 can be transmitted to the target box wall 113 through the first glue-applied portion 214 and the second glue-applied portion 217. The target box wall 113 has a strong deformation resistance, so that the target box wall 113 can absorb the collision force through the glue-applied portions and enhance the overall deformation resistance of the predetermined wall 212, thereby reducing the occurrence of severe deformation of the predetermined wall 212 in the region where the pressure relief portion 213 is located, improving the safety of the pressure relief portion 213, and improving the reliability of the battery 100.

According to some embodiments of the present application, the present application further provides an electrical apparatus, including the battery cell 21 according to any of the above solutions or the battery 100 according to any of the above solutions, and the battery 100 is used to provide electrical energy for the electrical device.

Here, the electrical apparatus may be a device or system that applies the battery 100 according to any of the foregoing embodiments.

As an example, the electrical apparatus may be, but is not limited to, a mobile phone, a tablet, a laptop computer, an electric toy, an electric tool, an electric bicycle, an electric vehicle, a ship, a spacecraft, and the like. Among them, the electric toys may include fixed or mobile electric toys, for example, game consoles, electric vehicle toys, electric ship toys, electric aircraft toys, etc., and the spacecraft may include airplanes, rockets, space shuttles, spaceships, etc.

For the convenience of description in the following embodiments, an electrical apparatus being a vehicle 1000 according to an embodiment of the present application is taken as an example for the description.

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is provided inside the vehicle 1000, and the battery 100 may be disposed at a bottom, or head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 can not only be used as the operating power source for the vehicle 1000, but also as the driving power source for the vehicle 1000, to replace or partially replace fuel or natural gas to provide driving power for the vehicle 1000.

In the description, the explanation with reference to the terms such as "an embodiment", "some embodiments", "exemplary embodiments", "examples", "specific examples", or "some examples" means that specific features, structures, materials, or characteristics described in combination with the embodiment(s) or example(s) are included in at least one embodiment or example of the present application. In the specification, the illustrative expressions of the aforementioned terms do not necessarily refer to the same embodiment or example. Moreover, the specific features, structures, materials, or characteristics described herein may be combined in any one or more embodiments or examples in a suitable manner.

Although the embodiments of the present application have been shown and described, those of ordinary skill in the art will understand that various changes, modifications, substitutions and modifications can be made to these embodiments without departing from the principles and purposes of the present application. The scope of the present application is defined by the claims and their equivalents.

## Claims

1. A battery cell, comprising:
a shell having a predetermined wall, the predetermined wall being provided with a pressure relief portion and a first glue-applied portion, wherein the first glue-applied portion is provided on two opposite sides of the pressure relief portion;
an electrode assembly, the electrode assembly being provided inside the shell; and
an electrode terminal, the electrode terminal being provided on the shell and electrically connected to the electrode assembly.

2. The battery cell according to claim 1, wherein the predetermined wall has a first direction, the first glue-applied portion extending along the first direction, and in the first direction, a dimension of the pressure relief portion being L1, and a dimension of the first glue-applied portion being L2, wherein 1.0 ≤ L2/L1 ≤ 2.0.

3. The battery cell according to claim 2, wherein L2/L1 ≤ 1.5.

4. The battery cell according to any one of claims 1 to 3, wherein the predetermined wall has a first direction and a second direction, the first glue-applied portion extending along the first direction, the second direction being perpendicular to the first direction, and in the second direction, a dimension of the pressure relief portion being W1, and a dimension of the first glue-applied portion being W2, wherein 0.3 ≤ W2/W1 ≤ 1.0.

5. The battery cell according to claim 4, wherein 0.4 ≤ W2/W1 ≤ 0.7.

6. The battery cell according to any one of claims 1 to 5, wherein the predetermined wall is provided with a non-glue-applied portion, the non-glue-applied portion being provided on a side of the first glue-applied portion away from the pressure relief portion.

7. The battery cell according to claim 6, wherein the predetermined wall has a first direction and a second direction, the first glue-applied portion extending along the first direction, the second direction being perpendicular to the first direction, and in the second direction, a dimension of the non-glue-applied portion being W3, and a dimension of the predetermined wall being W0, wherein 0.05 ≤ W3/W0 ≤ 0.2.

8. The battery cell according to claim 7, wherein 0.08 ≤ W3/W0 ≤ 0.15.

9. The battery cell according to any one of claims 1 to 8, wherein a first gap is formed between the first glue-applied portion and the pressure relief portion, and the predetermined wall has a first direction and a second direction, the first glue-applied portion extending along the first direction, the second direction being perpendicular to the first direction, and in the second direction, a dimension of the first gap being h1, wherein 3 mm ≤ h1 ≤ 15 mm.

10. The battery cell according to any one of claims 1 to 5, wherein the predetermined wall has a first direction and a second direction, the first glue-applied portion extending along the first direction, the second direction being perpendicular to the first direction, and in the second direction, one of two opposite edges of the first glue-applied portion abuts an edge of the predetermined wall, and the other one abuts an edge of the pressure relief portion.

11. The battery cell according to any one of claims 1 to 9, wherein the predetermined wall has a first direction and a second direction, the first glue-applied portion extending along the first direction, and the second direction being perpendicular to the first direction, and the predetermined wall is provided with a non-glue-applied portion, the non-glue-applied portion being provided on a side of the first glue-applied portion away from the pressure relief portion, and in the second direction, a dimension of the first glue-applied portion being W2, and a dimension of the non-glue-applied portion being W3, wherein 0.4 ≤ W3/W2 ≤ 1.0.

12. The battery cell according to claim 11, wherein 0.6 ≤ W3/W2 ≤ 0.8.

13. The battery cell according to any one of claims 1 to 12, wherein the predetermined wall has a second glue-applied portion, the second glue-applied portion being located on the other two opposite sides of the pressure relief portion.

14. The battery cell according to claim 13, wherein the predetermined wall has a first direction and a second direction, the first glue-applied portion extending along the first direction, the second direction being perpendicular to the first direction, and the second glue-applied portion extending along the second direction.

15. The battery cell according to claim 14, wherein in the first direction, a dimension of the second glue-applied portion is L3, and a dimension of the pressure relief portion is L1, wherein 0.15 ≤ L3/L1 ≤ 1.5.

16. The battery cell according to claim 14 or 15, wherein a second gap is formed between the second glue-applied portion and the pressure relief portion, in the first direction, a dimension of the second gap being h2, wherein 3 mm ≤ h2 ≤ 15 mm.

17. The battery cell according to any one of claims 14 to 16, wherein in the second direction, two opposite ends of the second glue-applied portion are connected to adjacent ones of the first glue-applied portions.

18. The battery cell according to any one of claims 1 to 17, wherein the shell has a plurality of wall portions, one of the plurality of wall portions being the predetermined wall, and the electrode terminal being provided on at least one of the wall portions other than the predetermined wall.

19. A battery, comprising:
a box, the box having a target box wall; and
the battery cell according to any one of claims 1 to 18, wherein the battery cell is provided in the box, the predetermined wall is disposed directly opposite to the target box wall, and the first glue-applied portion is connected to the target box wall.

20. The battery according to claim 19, wherein a wall thickness of the target box wall is greater than a wall thickness of the predetermined wall.

21. The battery according to claim 20, wherein a product of the wall thickness of the target box wall and a material tensile strength of the target box wall is M1, and a product of the wall thickness of the predetermined wall and a material tensile strength of the predetermined wall is M2, wherein M2 is greater than M1.

22. An electrical apparatus, comprising the battery cell according to any one of claims 1 to 18, or the battery according to any one of claims 19 to 21.
